Europäisches Patentamt

European Patent Office

Office européen des brevets

(19)

(11) Veröffentlichungsnummer: **0 332 269**

**A2**

(12) # EUROPÄISCHE PATENTANMELDUNG

(21) Anmeldenummer: **89200544.8**

(22) Anmeldetag: **06.03.89**

(51) Int. Cl.4: **H02K 21/08 , H02K 1/28**

(30) Priorität: **10.03.88 DE 3807810**

(43) Veröffentlichungstag der Anmeldung:
**13.09.89 Patentblatt 89/37**

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB**

(72) Erfinder: **Bertram, Leo**
**Am Sender 10**
**D-5190 Stolberg(DE)**
Erfinder: **Schemmann, Hugo, Dr.**
**Zwartebergweg 6**
**NL-Schaesberg(NL)**
Erfinder: **Bukoschek, Romuald Leander**
**Dr. Palla-Gasse 28**
**A-9020 Klagenfurt(AT)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Rotor für einen elektrischen Motor.**

(57) Die Erfindung bezieht sich auf einen Rotor (10) für einen elektrischen Motor, insbesondere für einen Mehrphasen-oder Einphasensynchronmotor, der aus einem dauermagnetischen keramischen Rotorzylinder (1) besteht, der aus durchbruchsfreiem Vollmaterial gefertigt ist und der zumindest an den Zylinderstirnflächen (3) mit Kunststoffanspritzungen (5) versehen ist, aus denen Wellenteile (6) axial vorstehen, die der umlauffähigen Lagerung des Rotors (10) dienen, wobei die Zylinderstirnflächen (3) mit Vertiefungen versehen sind und die Kunststoffanspritzungen (5) in die Vertiefungen (4) eingreifen.

FIG.4

## Rotor für einen elektrischen Motor

Die Erfindung bezieht sich auf einen Rotor für einen elektrischen Motor, insbesondere für einen Mehrphasen- oder Einphasensynchronmotor, der aus einem dauermagnetischen keramischen Rotorzylinder besteht, der aus durchbruchsfreiem Vollmaterial gefertigt ist und der zumindest an den Zylinderstirnflächen mit Kunststoffanspritzungen versehen ist, aus denen Wellenteile axial vorstehen, die der umlauffähigen Lagerung des Rotors dienen.

Ein derartiger Rotor ist aus der US-PS 45 87 450 bekannt. Dabei sind die beiden Kunststoffanspritzungen außerhalb des Rotorzylinders miteinander verbunden.

Keramisches Rotormaterial unterliegt beim Brennen einer deutlichen Schwindung, die immer der Anlaß von Rißbildungen sein kann. Insbesondere bei hochwertigeren keramischen Magnetmaterialien führen die Schwindungs- und Rißbildungen zu Fehlern und Ausschuß.

In der US-PS 45 87 450 sind verschiedene Rotorquerschnitte zwischen rund und eckig beschrieben. Ein eckiger keramischer Rotor ist fertigungstechnisch schwierig herzustellen; er erfordert eine Reihe von aufwendigen Schleifvorgängen. Der bekannte runde, zylindrische keramische Rotor ist zwar wirtschaftlicher herzustellen, ist aber bei größeren Motorleistungen mit der Kunststoffumspritzung nicht genügend verdrehfest verbindbar, um die erforderlichen Drehmomente zu übertragen. Die Schwierigkeit der Drehmomentübertragung treten bei in der DE 36 12 724 A1 und der JP-Patentanmeldung 54-140 109 beschriebenen Rotoren nicht auf, weil diese nur für kleine Leistungen im Uhrenbetrieb ausgelegt sind.

Es ist Aufgabe der Erfindung, einen Rotor der eingangs erwähnten Art zu schaffen, bei dem auf einfache Weise auch für die Übertragung hoher Drehmomente eine verdrehfeste Verbindung zwischen Rotor und Kunststoffanspritzungen sichergestellt ist.

Die gestellte Aufgabe ist erfindungsgemäß dadurch gelöst, daß die Zylinderstirnflächen mit Vertiefungen versehen sind und die Kunststoffanspritzungen in die Vertiefungen eingreifen.

Durch das Eingreifen der Kunststoffanspritzungen in die Vertiefungen an den Zylinderstirnflächen ergibt sich eine formschlüssige Verbindung zwischen Magnetmaterial und Kunststoff, welche in der Lage ist, große Drehmomente zu übertragen. Vertiefungen in den Stirnflächen sind bei der Magnetherstellung durch entsprechende Formgebung der Preßmatrizen herzustellen. Eine nachträgliche Bearbeitung der Zylinderstirnflächen ist nicht oder kaum erforderlich, weil die axialen Endmaße des Rotors beim Brennen mit geringen Toleranzen eingehalten werden können. Ein geringes auf Endmaßschleifen beeinträchtigt die Vertiefungen in den Stirnflächen nur geringfügig.

Aus der JP-Patentanmeldung 58-95 967 ist es bekannt, einen kunststoffgebundenen dauermagnetischen Rotor mit längs der Mantelfläche verlaufenden axialen Nuten zu versehen, in denen Kunststoffteile verlaufen, die Kunststoffteile an den Stirnflächen verbinden.

Nuten längs der Mantelfläche sind bei keramischen Rotormagnetkörpern kritisch. Je mehr der Rotor beschliffen werden muß, um an der Mantelfläche maßhaltig zu werden, umso mehr verschwinden beim Beschleifen die Nuten. Bei derartigen Rotoren ist es erforderlich, im Rotordurchmesser enge Maßtoleranzen einzuhalten. Bei hochwertigen anisotropen Magnetmaterialien ist verstärktes Schleifen erforderlich. Axial verlaufende Nuten an der Mantelfläche haben auch eine störende Kerbwirkung und begünstigen das Auftreten von Rissen.

Diese Probleme treten bei kunststoffgebundenen Dauermagnetkörpern nach der JP-Patentanmeldung 58-95 967 nicht auf. Diese können so maßhaltig gespritzt werden, daß sie nicht beschliffen werden müssen. Bei kunststoffgebundenen Dauermagnetkörpern ist die Gefahr einer Rißbildung nicht gegeben.

Nach einer weiteren Ausgestaltung der Erfindung ist vorgesehen, daß die Vertiefungen diametral verlaufende Nuten sind. Die diametrale Lage der Nuten hat den besonderen Vorteil, daß die Magnetisierungsrichtung des Rotorzylinders nach außen sichtbar und spürbar erkennbar gemacht werden kann. Dadurch wird der Einbau des Rotors in einer gewünschten Magnetisierungslage relativ zu weiteren Getriebe- oder Geräteteilen erleichtert. Dies gilt insbesondere bei Einphasensynchronantrieben.

Nach einer weiteren Ausgestaltung der Erfindung ist vorgesehen, daß die Vertiefungen radial verlaufende Nuten sind. Hiermit läßt sich eine symmetrische Verteilung der Drehmomentbelastung der Verbindungsstellen erreichen. Der radiale Verlauf kann eine stern- oder kreuzförmige Struktur haben.

Es hat sich gezeigt, daß das Aufspritzen der Kunststoffabdeckungen auf die mit Vertiefungen versehenen Zylinderstirnflächen zu einer so festen Verbindung mit den Stirnflächen des Rotorzylinders führt, daß die an die Kunststoffabdeckungen angespritzten Wellenstümpfe allen an sie gestellten Belastungen standhalten. Um der Konstruktion aber noch größere Sicherheit zu verleihen, ist es günstig, wenn die Kunststoffanspritzungen an den axialen Enden des Rotorzylindes außerhalb des Rotorzylinders miteinander verbunden sind. Solche Verbindungen können beispielsweise Verbindungsstege sein.

Die Erfindung wird anhand der Zeichnungen näher erläutert. Es zeigen:

Fig. 1 einen permanentmagnetischen Rotorzylinder mit Stirnflächen, die Nuten aufweisen, in Seitenansicht,

Fig. 2a und 2b den Rotorzylinder nach Fig. 1 mit zwei verschiedenen Ausführungsformen von Stirnseiten; in Fig. 2a ist der Nutenverlauf diametral, in Fig. 2b ist der Nutenverlauf kreuz- oder sternförmig radial,

Fig. 3 den Rotorzylinder nach Fig. 1 mit stirnseitig angespritzten Kunststoffabdeckungen und Wellenstümpfen,

Fig. 4 den Rotor nach Fig. 3 in dem Stator eines Einphasensynchronmotors, wobei die Kunststoffabdeckungen auf der linken Seite über Stege und auf der rechten Seite über einen Umspritzzylinder miteinander verbunden sind.

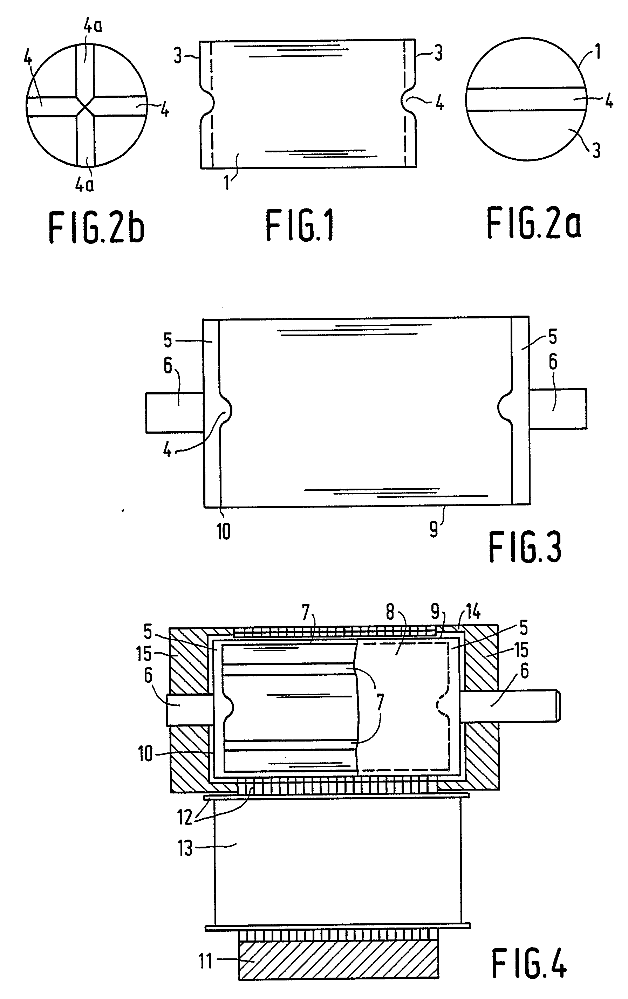

Fig. 1 zeigt einen Rotorzylinder, der der zentrale Teil eines Rotors einer elektrischen Maschine, insbesondere eines Mehrphasen- oder Einphasensynchronmotors ist. Der Rotorzylinder 1 besteht aus keramischem Dauermagnetmaterial, das nach dem in Form Pressen gebrannt wurde. Der Rotorzylinder hat an seinen Stirnflächen 3 Vertiefungen 4. Diese Vertiefungen sind im Ausführungsbeispiel Nuten. In Fig. 2a ist in jeder Stirnfläche 3 eine diametrale Nut vorgesehen. Mehrere solcher Nuten 4 können auch parallel zueinander verlaufen. In Fig. 2b bilden mehrere radiale Nuten 4a einen Stern oder ein Kreuz. Die Vertiefungen können aber auch einzelne, über die Stirnfläche verteilte Dellen sein.

Fig. 2 zeigt den Rotorzylinder 1 von einer Stirnfläche 3 her, und man erkennt in der Stirnfläche die diametral verlaufende nutartige Vertiefung 4. Der Rotorzylinder nach den Fig. 1 und 2 besteht aus Vollmaterial, d. h. daß er keinen durch den Zylinder hindurchgehenden axialen Durchbruch aufweist. Die Vertiefungen 4 befinden sich nur in den Stirnflächen 3.

Der Rotorzylinder nach Fig. 1 und 2 wird zu einem Rotor vervollständigt, indem auf den Stirnflächen 3 Kunststoff anspritzungen 5 vorgesehen werden. Das Kunststoffmaterial verbindet sich beim Aufspritzen mit den Zylinderstirnflächen 3 und fließt auch in die Vertiefungen 4, 4a ein. Die Verbindung zwischen den Kunststoffanspritzungen 5 und den Stirnflächen 3 wird dadurch stabilisiert.

Die Kunststoffanspritzungen 5 sind mit Wellenstümpfen 6 versehen, die axial aus den Anspritzungen hervorstehen. Der Rotor wird mittels der Wellenstümpfe 6 gelagert. Die Wellenstümpfe 6 sind auch aus Kunststoff gespritzt und können bereits eine Außen- oder Innenzahnung aufweisen, mit der es möglich ist, Verbindungen zu nicht dargestellten Getriebe- oder Antriebswellen herzustellen.

Die Nuten oder Vertiefungen 4 haben nicht nur die Aufgabe, die Verdrehfestigkeit zwischen den Kunststoffanspritzungen 5 und den Stirnflächen 3 zu verbessern. Die Lage der Nuten oder Vertiefungen 4 hat bei diametralem Verlauf nach Fig. 2a den weiteren Vorteil, daß die Magnetisierungsrichtung des Rotorzylinders nach außen sichtbar und spürbar erkennbar gemacht wird. Dadurch wird der Einbau des Rotors 1 in einer gewünschten Magnetorientierungslage relativ zu weiteren Getriebe- oder Geräteteilen erleichtert.

Wie Fig. 4 in dem linken Teil des Bildes zeigt, sind die Kunststoffanspritzungen 5 über sie verbindende, axial über die Rotorzylindermantelfläche 9 verlaufende Stege 7 verbunden. Der keramische Rotorzylinder 1 ist auf diese Weise in einem Käfig angeordnet, und die Kunststoffanspritzungen 5 werden zusammengehalten. Hierdurch erhält der Rotor 10 mehr mechanische Stabilität.

Fig. 4 zeigt auf der rechten Hälfte des Bildes, daß der Rotorzylinder 1 vollständig von einer Kunststoffummantelung 8 eingeschlossen ist. Das Rotormaterial wird auf diese Weise sicher zusammengehalten.

Fig. 4 zeigt in einem Hälftungsschnitt einen Stator 11, in dem der Rotor 10 angeordnet ist. Der Stator 11 weist ein Blechpaket 12 auf. Auf die dargestellte Hälfte des Blechpaketes 12 ist eine Erregerspule 13 aufgeschoben. Das Blechpaket trägt ein Gehäuse 14 mit Lagerschilden 15, in denen die Wellenstümpfe 6 umlauffähig gelagert sind.

## Ansprüche

1. Rotor (10) für einen elektrischen Motor, insbesondere für einen Mehrphasen- oder Einphasensynchronmotor, der aus einem dauermagnetischen keramischen Rotorzylinder (1) besteht, der aus durchbruchsfreiem Vollmaterial gefertigt ist und der zumindest an den Zylinderstirnflächen (3) mit Kunststoffanspritzungen (5) versehen ist, aus denen Wellenteile (6) axial vorstehen, die der umlauffähigen Lagerung des Rotors (10) dienen, dadurch gekennzeichnet, daß die Zylinderstirnflächen (3) mit Vertiefungen versehen sind und die Kunststoffanspritzungen (5) in die Vertiefungen (4) eingreifen.

2. Rotor nach Anspruch 1, dadurch gekennzeichnet, daß die Vertiefungen diametral verlaufende Nuten sind.

3. Rotor nach Anspruch 1, dadurch gekennzeichnet, daß die Vertiefungen radial verlaufende Nuten sind.

4. Elektrischer Motor, versehen mit einem Rotor (10) nach einem der Ansprüche 1 bis 3.

**FIG.2b**　　　**FIG.1**　　　**FIG.2a**

**FIG.3**

**FIG.4**